# EUROPÄISCHE PATENTSCHRIFT

(11) **EP 1 868 479 B1**
(45) Veröffentlichungstag und Bekanntmachung des Hinweises auf die Patenterteilung: **12.09.2012**
(21) Anmeldenummer: 06706420.4
(22) Anmeldetag: 26.01.2006
(51) Int. Cl.: A47L 9/20

(54) **VERFAHREN ZUM ABREINIGEN DER FILTER EINES STAUBSAUGERS SOWIE STAUBSAUGER ZUR DURCHFÜHRUNG DES VERFAHRENS**
METHOD FOR CLEANING THE FILTER OF A VACUUM CLEANER AND VACUUM CLEANER FOR CARRYING OUT SAID METHOD
PROCEDE POUR NETTOYER LES FILTRES D'UN ASPIRATEUR ET ASPIRATEUR POUR EXECUTER CE PROCEDE

(30) Priorität: 11.04.2005 DE 102005017702
(43) Veröffentlichungstag der Anmeldung: 26.12.2007
(60) Teilanmeldung: 12152405.2
(73) Patentinhaber: Alfred Kärcher GmbH & Co. KG, 71364 Winnenden (DE)
(72) Erfinder: STEWEN, Christian, 71672 Marbach a. N. (DE); HÄUSSERMANN, Uli, 70734 Fellbach (DE)
(74) Vertreter: Hoeger, Stellrecht & Partner Patentanwälte
(86) Internationale Anmeldenummer: PCT/EP2006/000671
(87) Internationale Veröffentlichungsnummer: WO 2006/108459

(56) Entgegenhaltungen:
- WO-A-95/27431
- DE-U1- 29 823 411
- US-A- 4 719 662
- US-A1- 2005 011 036

## Beschreibung

Die Erfindung betrifft ein Verfahren zum Abreinigen der Filter eines Staubsaugers, der einen Schmutzsammelbehälter mit einem Saugeinlass aufweist, an den ein Saugschlauch angeschlossen ist, wobei der Schmutzsammelbehälter über zumindest ein Filter und mindestens eine sich an dieses anschließende Absaugleitung mit mindestens einem Saugaggregat in Verbindung steht und zumindest ein Schließventil einen Fremdlufteinlass verschließt, über den die Absaugleitung mit einer Fremdluftzufuhr verbunden ist, und wobei man zur Abreinigung des mindestens einen Filters zumindest ein Schließventil öffnet und die dem Schmutzsammelbehälter abgewandte Seite des mindestens einen Filters mit Fremdluft beaufschlagt.

Die Erfindung betrifft außerdem einen Staubsauger zur Durchführung des Verfahrens.

Mittels der hier in Rede stehenden Staubsauger kann Schmutz und vorzugsweise auch Flüssigkeit aufgesaugt werden, indem man den Schmutzsammelbehälter mit Hilfe von mindestens einem Saugaggregat mit Unterdruck beaufschlagt, so dass sich eine Saugströmung ausbildet. Die Staubsauger weisen ein oder mehrere Filter auf, die im Strömungsweg vom Schmutzsammelbehälter zum mindestens einen Saugaggregat angeordnet sind und der Abscheidung von Feststoffen aus der Saugströmung dienen. Während des Saugbetriebes lagern sich zunehmend Schmutzteilchen an der dem Schmutzsammelbehälter zugewandten Seite des mindestens einen Filters an, so dass das bzw. die Filter nach einiger Zeit abgereinigt werden müssen. Zur Abreinigung kann die dem Schmutzsammelbehälter abgewandte Seite der Filter mit Fremdluft beaufschlagt werden, indem mindestens ein Schließventil geöffnet wird, so dass über den Fremdlufteinlass Fremdluft in die mindestens eine Absaugleitung einströmen kann.

Zur Abreinigung eines Filters wird in der DE 298 23 411 U1 vorgeschlagen, den Saugschlauch kurzzeitig zu verschließen, so dass sich im Schmutzsammelbehälter ein starker Unterdruck ausbildet, und anschließend soll ein Schließventil kurzzeitig geöffnet werden. Das Filter wird dann in Gegenstromrichtung, das heißt entgegen der Richtung der Saugströmung, von der Fremdluft durchströmt, so dass sich am Filter anhaftende Schmutzteilchen ablösen. Dadurch kann eine wirkungsvolle Abreinigung des Filters erzielt werden, allerdings muss hierzu der Saugbetrieb vom Benutzer unterbrochen werden.

In der DE 199 49 095 A1 wird der Einsatz von zwei Filtern vorgeschlagen, die alternativ abgereinigt werden, wobei während der Abreinigung des einen Filters der Saugbetrieb über das andere Filter in eingeschränktem Umfang fortgesetzt werden kann. Dies erfordert allerdings eine aufwendige Konstruktion, wobei die beiden Filter eine erhebliche Baugröße aufweisen müssen, um während des eingeschränkten Saugbetriebes eine ausreichende Saugströmung zu ermöglichen. Außerdem ist die alternative Abreinigung von jeweils einem Filter bei gleichzeitiger Aufrechterhaltung des Saugbetriebes über das andere Filter störungsanfällig.

Aufgabe der vorliegenden Erfindung ist es, für einen Staubsauger ein Verfahren zur Filterabreinigung bereitzustellen, bei dem während des Saugbetriebes sämtliche vorhandenen Filter mit Saugluft durchströmt werden können, der Saugbetrieb zur Filterabreinigung für den Benutzer jedoch nicht merklich unterbrochen werden muss.

Diese Aufgabe wird bei einem Verfahren der eingangs genannten Art erfindungsgemäß dadurch gelöst, dass man durch gleichzeitiges Öffnen aller Schließventile den Unterdruck, der sich bei Anschluss eines 2,5 m langen, an seinem freien Ende offenen und einen Innendurchmesser von 35 mm aufweisenden Saugschlauches innerhalb des Saugschlauches in einem Abstand von 3 cm vom Saugeinlass ausbildet, für mindestens 10 ms und maximal 150 ms auf Werte von weniger als 40 % des sich bei geschlossenen Schließventilen ausbildenden Wertes absenkt.

Beim erfindungsgemäßen Staubsauger wird die Saugluft mittels der vorhandenen Filter gefiltert, wobei sämtliche Filter gleichzeitig zum Einsatz kommen. Es kann sich dabei um ein einziges Filter handeln oder auch um mehrere Filter, die gleichzeitig durchströmt werden. Es hat sich gezeigt, dass das mindestens eine Filter wirkungsvoll innerhalb kürzester Zeit abgereinigt werden kann, ohne dass sich für den Benutzer eine merkliche Unterbrechung des Saugbetriebes einstellt, sofern der Unterdruck im Mündungsbereich eines standardmäßigen Saugschlauches für mindestens 10 ms und maximal 150 ms auf Werte von weniger als 40 % abgesenkt wird bezogen auf den Wert des Unterdruckes, der sich bei geschlossenen Schließventilen einstellt. Unter einem standardmäßigen Saugschlauch wird hierbei ein Saugschlauch mit einer Länge von 2,5 m und einem Innendurchmesser von 35 mm verstanden. Derartige Saugschläuche kommen üblicherweise bei Staubsauger der hier in Rede stehenden Art zum Einsatz. Sie finden insbesondere dann Verwendung, wenn der Staubsauger an ein Bearbeitungswerkzeug, beispielsweise ein Bohrgerät oder eine Mauerschlitzfräse, angeschlossen wird, so dass der bei Einsatz des Bearbeitungswerkzeuges anfallende Staub während des Betriebes des Bearbeitungswerkzeuges abgesaugt werden kann. Die voranstehend genannten Unterdruckwerte beziehen sich auf eine Situation, bei der am freien Ende des Saugschlauches kein Werkzeug angeschlossen ist, das freie Ende also offen ist. Ist der Saugschlauch mit einem Werkzeug verbunden, so stellt sich üblicherweise ein stärkerer Unterdruck im Mündungsbereich des Saugschlauches ein. Die voranstehenden Unterdruckwerte bilden somit Referenzwerte, um das Filterabreinigungsverfahren sowie die Konstruktion des entsprechenden Staubsaugers zu charakterisieren.

Es hat sich gezeigt, dass eine wirkungsvolle Abreinigung des mindestens einen Filters sichergestellt werden kann, wenn sich der im Saugschlauch in einem Abstand vom 3 cm vom Saugeinlass ausbildende Unterdruck für mindestens 10 ms unter einen Wert von 40 % des sich bei geschlossenen Schließventilen ausbildenden Wertes absenkt. Die Absenkung des Unterdruckes erfolgt allerdings längstens für 150 ms, anschließend stellt sich bereits wieder ein stärkerer Unterdruck im Mündungsbereich des Saugschlauches ein. Dadurch ist sichergestellt, dass sich für den Benutzer praktisch keine Unterbrechung des Saugbetriebes einstellt, der Saugbetrieb wird vielmehr quasi kontinuierlich fortgesetzt. Die Filterabreinigung erfolgt also nur für Bruchteile einer Sekunde, die Öffnung des Schließventils erfolgt nämlich für weniger als 150 ms. Innerhalb dieser Zeit wird auf der dem Schmutzsammelbehälter abgewandten Seite des mindestens einen Filters der Unterdruck schlagartig stark herabgesetzt, so dass die gesamte, dem Schmutzsammelbehälter abgewandte Seite des Filters mit einem Druckstoß beaufschlagt wird, der zu einer Abreinigung des Filters führt, außerdem wird das Filter für kurze Zeit in Gegenstromrichtung von der Fremdluft durchströmt. Da das Saugaggregat auch während des Öffnens des Schließventils mit dem Filter in Strömungsverbindung steht, wird die kurzzeitig in die Absaugleitung einströmende Fremdluft gleich wieder abgesaugt, so dass sich der Unterdruck wieder verstärkt und sich dadurch über das Filter die ursprüngliche Saugströmung wieder einstellt. Das mindestens eine Filter wird demzufolge in Bruchteilen von einer Sekunde ausgehend von der ursprünglichen Saugströmung kurzzeitig von einer Fremdluftströmung und anschließend wieder von der Saugströmung durchströmt. Dies hat einer alternierende mechanische Belastung des Filters zur Folge, durch die die Filterabreinigung unterstützt wird.

Vorzugsweise rüstet man den Staubsauger mit einem einzigen Filter aus, das man kurzzeitig, wie voranstehend beschrieben, abreinigt.

Es kann vorgesehen sein, dass der Staubsauger mehrere Fremdlufteinlässe aufweist, die jeweils mittels eines Schließventils verschließbar sind. Durch gleichzeitiges Öffnen aller Schließventile kann dann eine große Menge an Fremdluft dem mindestens einen Filter zugeführt werden. Allerdings erfordert dies eine sehr genaue Koordination der einzelnen Schließventile. Günstiger ist es, wenn man die gesamte, dem Schmutzsammelbehälter abgewandte Fläche des mindestens einen Filters durch Öffnen von nur einem einzigen Schließventil mit Fremdluft beaufschlagt.

Um das mindestens eine Schließventil sehr kurzzeitig betätigen zu können, ist es günstig, wenn man das Schließventil elektronisch betätigt. So kann beispielsweise ein Elektromagnet zum Einsatz kommen, insbesondere ein Elektrohaftmagnet, mit dessen Hilfe ein beweglicher Ventilkörper in einer Schließstellung gehalten werden kann, indem der Elektromagnet mit Strom beaufschlagt wird. Soll das Schließventil geöffnet werden, so wird hierzu die Stromversorgung des Elektromagneten unterbrochen. Der Einsatz von einem Elektrohaftmagnet ist hierbei von besonderem Vorteil, denn dieser zeichnet sich durch eine sehr geringe Remanenz aus, das heißt bei Unterbrechung der Stromzufuhr weist der Elektrohaftmagnet nur eine sehr geringe Magnetfeldstärke auf, die den Ventilkörper in seiner Schließstellung haltende Magnetkraft kann also durch Unterbrechung der Stromzufuhr innerhalb sehr kurzer Zeit auf sehr geringe Werte abgesenkt werden, so dass das Schließventil schlagartig öffnet.

Es kann vorgesehen sein, dass man das mindestens eine Schließventil zeitgesteuert betätigt, insbesondere kann vorgesehen sein, dass man das Schließventil in zeitlichen Abständen von weniger als 30 Sekunden, insbesondere in zeitlichen Abständen von weniger als 15 Sekunden, beispielsweise alle 5 Sekunden betätigt.

Die Betätigung des mindestens einen Schließventils kann in unterschiedlichen zeitlichen Abständen erfolgen, beispielsweise kann man das Schließventil zunächst für einen längeren Zeitraum geschlossen halten, um es dann in mehreren kürzeren zeitlichen Abständen kurz zu öffnen.

Alternativ oder ergänzend kann man das mindestens eine Schließventil in Abhängigkeit von der sich bei geschlossenem Schließventil am mindestens einen Filter ausbildenden Druckdifferenz elektronisch betätigen. Hierzu kann stromaufwärts und stromabwärts des Filters jeweils mindestens ein Drucksensor angeordnet sein, mit dessen Hilfe sich der jeweils einstellende Unterdruck erfasst werden kann. Durch Vergleich der erfassten Druckwerte kann die sich am mindestens einen Filter ausbildende Druckdifferenz ermittelt werden. Das sich allmählich mit Schmutzteilchen zusetzende Filter bildet einen zunehmenden Strömungswiderstand, so dass die sich ausbildende Druckdifferenz ein Maß darstellt für die Verschmutzung des Filters. Erreicht die Druckdifferenz einen vorgegebenden Wert, so kann das Schließventil elektronisch betätigt werden, um das Filter abzureinigen.

Wie eingangs erwähnt, betrifft die Erfindung auch einen Staubsauger zur Durchführung des voranstehend genannten Verfahrens. Der Staubsauger umfasst einen Schmutzsammelbehälter, der einen Saugeinlass aufweist, an den ein Saugschlauch angeschlossen ist, sowie mindestens ein mit dem Schmutzsammelbehälter über zumindest ein Filter und mindestens eine sich an dieses anschließende Absaugleitung in Verbindung stehendes Saugaggregat. Der Staubsauger weist außerdem mindestens einen Fremdlufteinlass auf, über den die mindestens eine Absaugleitung mit einer Fremdluftzufuhr verbunden ist und der mittels eines oder mehrerer Schließventile verschließbar ist, wobei die Schließventile mindestens einen gerätefesten Ventilsitz und einen bewegbaren Ventilkörper aufweist.

Um einen derartigen Staubsauger derart weiterzubilden, dass während des Saugbetriebes sämtliche Filter von Saugluft durchströmt werden können, zur Filterabreinigung der Saugbetrieb jedoch nicht merklich unterbrochen werden muss, wird erfindungsgemäß vorgeschlagen, dass durch gleichzeitiges Öffnen aller Schließventile der Unterdruck, der sich bei Anschluss eines 2,5 m langen, an seinem freien Ende offenen und einen Innendurchmesser von 35 mm aufweisenden Saugschlauches innerhalb des Saugschlauches in einem Abstand von 3 cm vom Saugeinlass ausbildet, für mindestens 10 ms und maximal 150 ms auf Werte von weniger als 40 % des sich bei geschlossenen Schließventilen ausbildenden Wertes absenkbar ist.

Ein derart ausgestalteter Staubsauger hat den Vorteil, dass der Saugbetrieb quasi kontinuierlich fortgesetzt werden kann, und dennoch kann eine wirkungsvolle Filterabreinigung erzielt werden, indem man sicherstellt, dass der Unterdruck im Mündungsbereich eines standardmäßigen Saugschlauches zwar auf Werte unterhalb von 40 % des sich bei geschlossenen Schließventilen einstellenden Unterdruckes absenkt, diese Absenkung allerdings maximal 150 ms andauert. Das mindestens eine Filter wird folglich nur für so kurze Zeit in Gegenstromrichtung von Fremdluft durchströmt, dass die Saugströmung innerhalb des Saugschlauches nicht merklich unterbrochen wird. Der Staubsauger zeichnet sich hierbei durch einen konstruktiv einfachen Aufbau aus, indem sämtliche vorhandenen Filter im Saugbetrieb gleichzeitig von Saugluft durchströmt werden. Durch kurzzeitiges Öffnen des mindestens einen Schließventils kann die gesamte, dem Schmutzsammelbehälter abgewandte Seite des mindestens einen Filters mit Fremdluft beaufschlagt werden. Fremdluft wird hierbei dem Filter schlagartig zugeführt, wobei das mindestens eine Saugaggregat permanent mit dem Filter in Strömungsverbindung steht.

Vorzugsweise weist der Staubsauger nur ein einziges Filter auf.

Bei einer besonders bevorzugten Ausgestaltung des erfindungsgemäßen Staubsaugers ist der Ventilkörper des mindestens einen Schließventils unter Ausbildung von einer oder mehreren Dichtungslinien an den mindestens einen Ventilsitz dicht anlegbar, wobei die von den Dichtungslinien begrenzte, im geschlossenen Zustand des Schließventils mit einem Differenzdruck beaufschlagte Fläche maximal halb so groß ist wie eine Kreisfläche, deren Umfang der Gesamtlänge aller Dichtungslinien entspricht. Die von der mindestens einen Dichtungslinie begrenzte Fläche ist die Fläche des Ventilkörpers, die im geschlossenen Zustand von einem Differenzdruck beaufschlagt ist. Es hat sich gezeigt, dass durch Bereitstellung einer möglichst langen Dichtungslinie beim Öffnen des Schließventils innerhalb sehr kurzer Zeit eine große Menge an Fremdluft einströmen kann. Der Verlauf der mindestens einen Dichtungslinie ist jedoch so gewählt, dass sie eine möglichst geringe Fläche begrenzt. Verglichen mit einer Kreisfläche, deren Umfang der Gesamtlänge aller Dichtungslinien entspricht, ist die von den Dichtungslinien begrenzte, druckbeaufschlagte Fläche allenfalls halb so groß. Dadurch wird sichergestellt, dass der Ventilkörper in der Schließstellung nur mit einer verhältnismäßig geringen Druckkraft beaufschlagt wird. Der Ventilkörper kann deshalb mit einer verhältnismäßig geringen Masse ausgestaltet sein, die es ermöglicht, ihn innerhalb kurzer Zeit sehr stark zu beschleunigen, ohne dass hierzu starke Antriebskräfte erforderlich sind.

Von besonderem Vorteil ist es, wenn die von der mindestens einen Dichtungslinie begrenzte, im geschlossenen Zustand des Schließventils mit einem Differenzdruck beaufschlagte Fläche kleiner ist als ein Fünftel einer Kreisfläche, deren Umfang der Gesamtlänge aller Dichtungslinien entspricht.

Die mindestens eine Dichtungslinie kann beispielsweise sternförmig oder kleeblattartig ausgebildet sein, um einerseits den Fremdlufteinlass über eine große Länge abzudichten und bei Öffnen des Schließventils über eine große Länge freizugeben, so dass beim Öffnen des Schließventils innerhalb kurzer Zeit eine große Menge an Fremdluft in die Absaugleitung einströmen kann, und um andererseits sicherzustellen, dass die Dichtungslinie nur eine verhältnismäßig geringe Fläche begrenzt, die in der Schließstellung des Schließventils vom Differenzdruck beaufschlagt ist.

Alternativ kann vorgesehen sein, dass mehrere Dichtungslinien geschlossene Dichtungsringe ausbilden. Die Dichtungsringe können nebeneinander, vorzugsweise aber konzentrisch zueinander angeordnet sein. Insbesondere kann vorgesehen sein, dass die Dichtungsringe rund ausgestaltet sind. Sie können in einer gemeinsamen Ebene angeordnet sein oder aber auch in zueinander versetzten oder verkippten Ebenen.

Damit beim Öffnen des mindestens einen Schließventils innerhalb sehr kurzer Zeit eine große Menge an Fremdluft in die Absaugleitung einströmen kann, ist es von Vorteil, wenn der Ventilkörper zumindest eine Durchlassöffnung aufweist, die in der Schließstellung des Ventilkörpers von mindestens einem Dichtungselement begrenzt ist. Die Bereitstellung einer Durchlassöffnung im Ventilkörper ermöglicht es, einen Teil der Fremdluft beim Öffnen des Schließventiles durch die Durchlassöffnung hindurchzuführen, während ein anderer Teil der Fremdluft den Ventilkörper außenseitig umströmen kann.

Von Vorteil ist es, wenn der mindestens eine Ventilsitz mehrere Durchgangsöffnungen aufweist, die in der Schließstellung des Ventilkörpers jeweils von mindestens einem Dichtungselement begrenzt sind. So kann beispielsweise vorgesehen sein, dass der Ventilsitz zwei kreisringsförmige, konzentrisch zueinander angeordnete Durchgangsöffnungen umfasst und der Ventilkörper in einem radialen Zwischenbereich zwischen den beiden Durchgangsöffnungen des Ventilsitzes eine kreisringsförmige Durchlassöffnung aufweist. Nimmt der Ventilkörper seine Schließstellung ein, so deckt er die Durchgangsöffnungen des Ventilsitzes ab und das Schließventil ist dicht verschlossen. Hebt der Ventilkörper vom Ventilsitz ab, so gibt er die Durchgangsöffnungen des Ventilsitzes frei und stellt über seine zwischen den beiden Durchgangsöffnungen angeordnete Durchlassöffnung einen weiteren Strömungsweg für die einströmende Fremdluft bereit.

Bei einer bevorzugten Ausführungsform ist der Ventilkörper mittels einer Schließfeder mit einer Schließkraft beaufschlagt und mittels eines Elektromagneten, insbesondere eines Elektrohaftmagneten, in seiner Schließstellung gehalten. Der Elektrohaftmagnet zeichnet sich durch eine sehr geringe Remanenz aus, so dass die Magnetkraft durch Unterbrechung der Stromzufuhr innerhalb kürzester Zeit stark abfällt, und durch die Schließfeder wird der Ventilkörper sehr nahe an den Elektromagneten herangeführt, so dass er von dem Magnetfeld in seiner Schließstellung gehalten werden kann.

Eine sehr kurzzeitige Öffnungsbewegung des Ventilkörpers wird bei einer vorteilhaften Ausführungsform dadurch sichergestellt, dass beim Öffnen des Schließventiles der Ventilkörper kontinuierlich von seiner Schließstellung über seine Offenstellung zurück in seine Schließstellung bewegbar ist. Der Ventilkörper nimmt folglich in seiner Offenstellung keine Ruheposition ein, er führt beim Öffnen des Schließventiles lediglich eine hin und her gehende Bewegung aus, die ihn ausgehend von seiner Schließstellung über die Offenstellung in die Schließstellung zurückführt. Eine derartige Bewegung kann beispielsweise dadurch sichergestellt werden, dass der Ventilkörper mit einer Schließfeder zusammenwirkt, die beim Öffnen des Schließventils die Energie des Ventilkörpers aufnimmt, diesen abbremst und in Richtung auf seine Schließstellung erneut beschleunigt, so dass er wieder in die Reichweite des Elektromagneten gelangt. Die Schließfeder kann hierbei eine nicht lineare Kennlinie aufweisen, so dass die Bewegung des Ventilkörpers zu Beginn nur minimal gehemmt wird und dadurch ein maximaler Druckstoß über die Fremdluft ermöglicht wird. Die Schließfeder kann einteilig oder auch mehrteilig, insbesondere zweiteilig ausgebildet sein.

Um sicherzustellen, dass der Ventilkörper beim Öffnen des Schließventiles nicht verkantet, ist es günstig, wenn der Ventilkörper in einer zylinderförmigen Führung verschiebbar gehalten ist. Durch die Bereitstellung einer zylinderförmigen Führung kann sich der Ventilkörper um die Zylinderachse verdrehen, ohne dass dadurch seine Öffnungs- und Schließbewegung beeinträchtigt wird.

Die nachfolgende Beschreibung einer bevorzugten Ausführungsform der Erfindung dient im Zusammenhang mit der Zeichnung der näheren Erläuterung. Es zeigen:
- Figur 1:: eine schematische Schnittansicht eines erfindungsgemäßen Saugreinigungsgerätes;
- Figur 2:: eine vergrößerte Schnittansicht des Saugreinigungsgerätes aus Figur 1 im Bereich eines Schließventils;
- Figur 3:: eine ausschnittsweise Draufsicht einer Ventilhalterung des Schließventils;
- Figur 4:: eine Schnittansicht längs der Linie 4-4 in Figur 3;
- Figur 5:: eine Schnittansicht eines Ventilkörpers des Schließventils;
- Figur 6:: eine schaubildliche Darstellung des Ventilkörpers aus Figur 5 und
- Figur 7:: den Verlauf des sich im Mündungsbereich eines an das Saugreinigungsgerät angeschlossenen Saugschlauches ausbildenden Unterdruckes beim Betätigen des Schließventils.

In der Zeichnung ist schematisch ein Staubsauger 10 dargestellt mit einem Schmutzsammelbehälter 12, auf den ein Oberteil 14 aufgesetzt ist, das ein Saugaggregat 16 aufnimmt. Der Schmutzsammelbehälter 12 weist ein Volumen von etwa 80 I auf, vorzugsweise ein Volumen von circa 30 I bis ungefähr 80 I. Er umfasst einen Saugeinlass 18, an den ein Saugschlauch 20 angeschlossen ist, an dessen freiem Ende, das in der Zeichnung zur Erzielung eines besseren Übersicht nicht dargestellt ist, eine Saugdüse angeordnet werden kann. Alternativ kann vorgesehen sein, dass der Saugschlauch 20 an ein Bearbeitungswerkzeug, beispielsweise eine Bohrmaschine oder eine Mauerschlitzfräse, angeschlossen wird, so dass während des Betriebes des Bearbeitungswerkzeuges anfallender Staub abgesaugt werden kann.

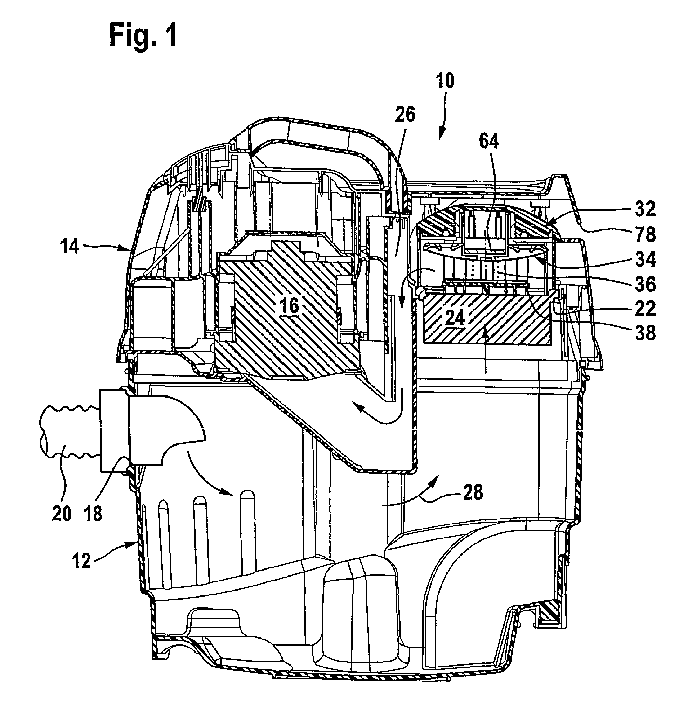

Das Oberteil 14 bildet einen Saugauslass 22 für den Schmutzsammelbehälter 12, wobei am Saugauslass 22 ein Faltenfilter 24 gehalten ist, an das sich eine Absaugleitung in Form eines Saugkanales 26 anschließt, über den das Faltenfilter 24 mit dem Saugaggregat 16 in Strömungsverbindung steht. Über den Saugkanal 26 und das Faltenfilter 24 kann der Schmutzsammelbehälter 12 vom Saugaggregat 16 mit Unterdruck beaufschlagt werden, so dass sich eine in Figur 1 durch die Pfeile 28 symbolisierte Saugströmung ausbildet, unter deren Wirkung Schmutz in den Schmutzsammelbehälter 12 eingesaugt werden kann. Mittels des Faltenfilters 24 können die Schmutzteilchen von der Saugströmung 28 abgeschieden werden.

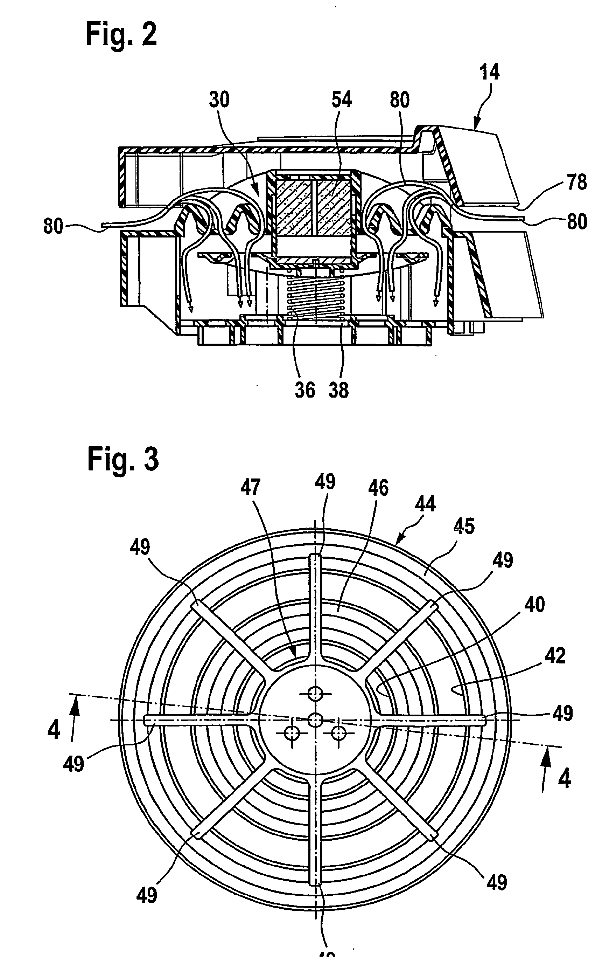

Oberhalb des Faltenfilters 24 ist im Oberteil 14 ein Schließventil 30 angeordnet, das in Figur 2 vergrößert dargestellt ist. Es umfasst eine ortsfest im Oberteil 14 angeordnete Ventilhalterung 32, die einen Ventilsitz ausbildet und mit einem Ventilkörper in Form eines Ventiltellers 34 zusammenwirkt. Der Ventilteller 34 ist mittels einer Schließfeder 36 mit nicht linearer Kennlinie in Richtung auf die Ventilhalterung 32 mit einer Schließkraft beaufschlagt. Die Schließfeder 36 ist zwischen einer plattenartigen, ortsfest im Oberteil 14 angeordneten Filterhalterung 38 und dem Ventilteller 34 eingespannt.

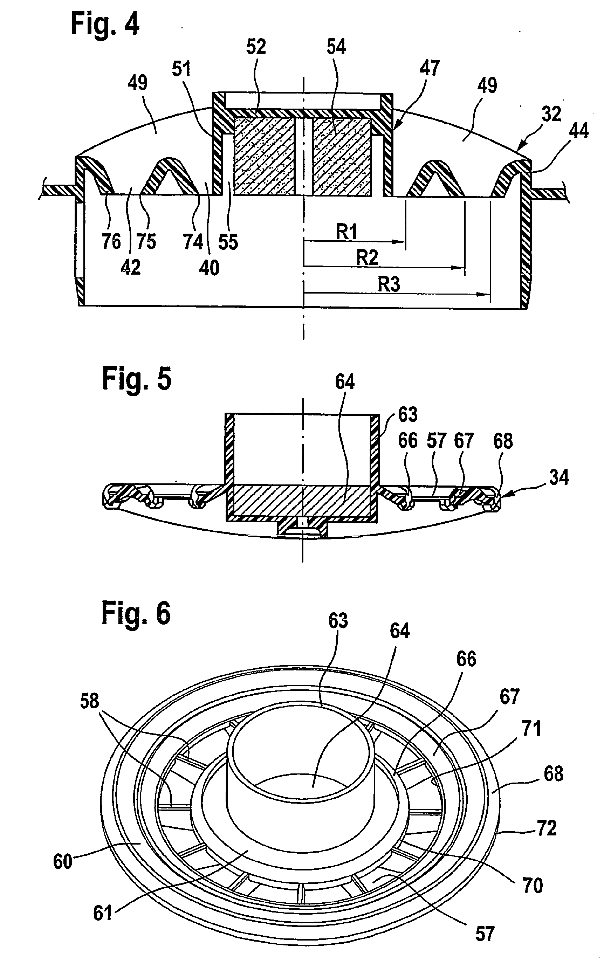

Wie insbesondere aus den Figuren 3 und 4 deutlich wird, weist die Ventilhalterung 32 zwei konzentrisch zueinander angeordnete, kreisringförmige Durchgangsöffnungen 40, 42 auf, die in der Schließstellung des Schließventils 30 von dem Ventilteller 34 dicht verschlossen werden. Die Durchgangsöffnungen 40 und 42 bilden einen Fremdlufteinlass und sind in eine Haltescheibe 44 der Ventilhalterung 32 eingeformt, wobei die Haltescheibe 44 durch die Durchgangsöffnungen 40 und 42 in einen Außenring 45 und einen Innenring 46 unterteilt wird, die ein zylinderförmiges Mittelteil 47 konzentrisch umgeben und mittels außenseitig vom Mittelteil 47 in radialer Richtung abstehender Halterippen 49 am Mittelteil 47 festgelegt sind.

Das Mittelteil 47 umfasst einen hohlzylinderförmigen Mantel 51, der oberseitig von einer Stirnwand 52 abgedeckt ist und einen Elektrohaftmagneten 54 aufnimmt. Dieser ist innerhalb des Mittelteiles 47 von einem Ringraum 55 umgeben und steht über in der Zeichnung nicht dargestellte Verbindungskabel mit einer in der Zeichnung ebenfalls nicht dargestellten Steuereinheit des Staubsaugers 10 in elektrischer Verbindung.

Der Ventilteller 34 weist eine kreisringförmige Durchlassöffnung 57 auf, die von einer Vielzahl von radial ausgerichteten Stützrippen 58 durchgriffen ist, welche einen äußeren Ringbereich 60 des Ventiltellers 34 mit einem kreisförmigen Zentralbereich 61 des Ventiltellers 34 verbinden. Vom Zentralbereich 61 steht in Richtung des Mittelteils 47 der Ventilhalterung 32 eine Führungshülse 63 nach oben ab, die in den Ringraum 55 der Ventilhalterung 32 eintaucht und eine Eisenplatte 64 aufnimmt, die in die Führungshülse 63 eingeklebt ist.

Der Ventilteller 34 trägt an seiner der Ventilhalterung 32 zugewandten Oberseite einen inneren Dichtring 66, einen mittleren Dichtring 67 und einen äußeren Dichtring 68, die konzentrisch zueinander ausgerichtet sind und jeweils eine Dichtlippe ausbilden. Der innere Dichtring 66 verläuft entlang einer Innenkante 70 der Durchlassöffnung 57, der mittlere Dichtring 67 verläuft entlang einer Außenkante 71 der Durchlassöffnung 57 und der äußere Dichtring 68 verläuft entlang des äußeren Umfanges 72 des Ventiltellers 34.

In der Schließstellung des Ventiltellers 34 legt sich der innere Dichtring 66 abdichtend an den Außenrand 74 der Durchgangsöffnung 40 der Ventilhalterung 32 an, und der mittlere Dichtring 67 sowie der äußere Dichtring 68 legen sich abdichtend an eine Innenkante 75 bzw. eine Außenkante 76 der Durchgangsöffnung 42 an. Die Dichtringe 66, 67 und 68 definieren somit kreisringförmige Dichtlinien, die eine von der sich am Schließventil 30 ausbildenden Druckdifferenz beaufschlagte Fläche begrenzen. Der innere Dichtring 66 begrenzt hierbei eine erste, kreisförmige Teilfläche mit einem Radius R1, und die Dichtringe 67 und 68 begrenzen eine zweite, kreisringförmige Teilfläche mit einem Innenradius R2 und einem Außenradius R3. Insgesamt weist somit das Schließventil 30 eine durch die Dichtringe 66, 67 und 68 definierte Dichtlinie auf, deren Länge sich aus der Summe der Länge der Dichtringe 66, 67 und 68 ergibt. Die so gebildete Dichtlinie begrenzt eine von der sich am Schließventil 30 ausbildenden Druckdifferenz beaufschlagte Fläche, die sich aus der Summe der erläuterten ersten und zweiten Teilflächen ergibt. Das Quadrat der Gesamtlänge der Dichtlinie ist größer als das 25-fache der von der Dichtlinie begrenzten Fläche. Verglichen mit einer Kreisfläche, deren Umfang der Gesamtlänge der Dichtlinie entspricht, ist die von der Dichtlinie begrenzte Fläche deutlich kleiner als 50 % der Kreisfläche. Dies hat zur Folge, dass sich beim Öffnen des Schließventils 30 eine intensive Fremdluftströmung ausbilden kann, durch die im Bereich zwischen dem Faltenfilter 24 und dem Schließventil 30 der Unterdruck schlagartig abfällt, so dass das Faltenfilter 24 mit einem Druckstoß beaufschlagt wird und kurzzeitig entgegen der Saugströmung 28 von Fremdluft durchströmt wird, die über eine Fremdluftzufuhr in Form einer seitlichen Öffnung 78 in das Oberteil 14 einströmen kann. Die Fremdluftströmung ist in Figur 2 durch die Pfeile 80 veranschaulicht.

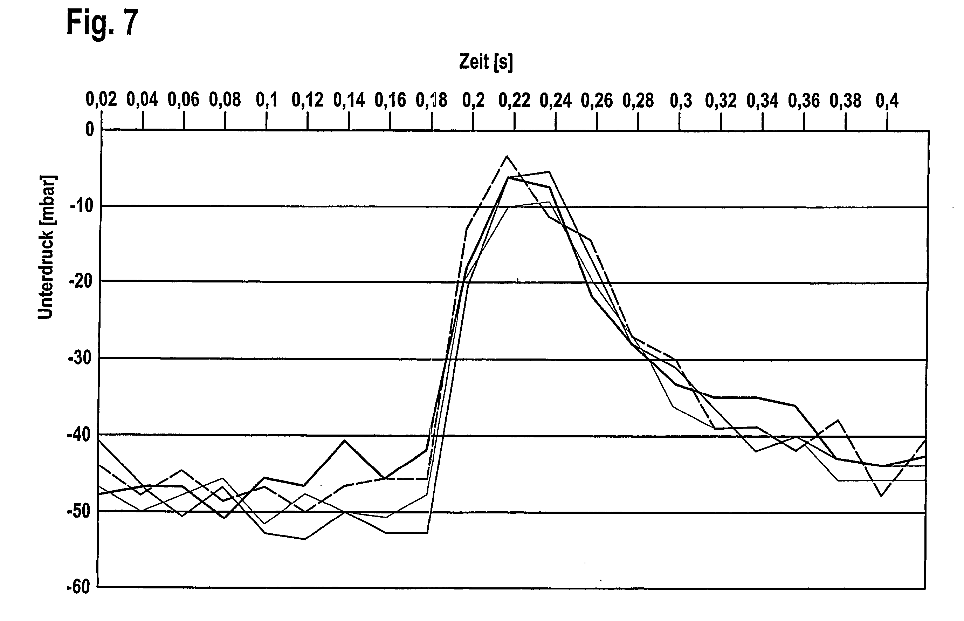

Nimmt das Schließventil 30 seine Schließstellung ein, so bildet sich im Schmutzsammelbehälter 12 sowie im Saugkanal 26 ein Unterdruck aus. Wird an den Saugeinlass 18 ein Saugschlauch mit einer Länge von 2,5 m angeschlossen, der einen Innendurchmesser von 35 mm aufweist, so beträgt der Unterdruck im Mündungsbereich des Saugschlauches, nämlich in einem Abstand von 3 cm vom Saugeinlass 18 ungefähr 50 mbar, sofern an das freie Ende des Saugschlauches kein Werkzeug und auch keine Saugdüse angeschlossen ist. Figur 7 zeigt den Verlauf von entsprechender Druckmessungen. Wird zur Betätigung des Schließventils 30 die Stromzufuhr des Elektrohaftmagneten 54 unterbrochen, so entfällt schlagartig die Magnetkraft, mit der die Eisenplatte 64 am Elektrohaftmagneten gehalten wird. Dies hat zur Folge, dass sich der Ventilteller 34 unter der Wirkung der sich am Schließventil 30 ausbildenden Druckdifferenz entgegen der Schließkraft der Schließfeder 36 von der Ventilhalterung 32 abhebt. Die Schließfeder 36 nimmt die Energie des Ventiltellers 34 auf, bremst diesen ab und beschleunigt ihn anschließend wieder zurück, so dass er innerhalb kurzer Zeit wieder seine Schließstellung einnimmt und die Durchgangsöffnungen 40 und 42 der Ventilhalterung 32 verschließt. Während der Bewegung des Ventiltellers 34 bildet sich die Fremdluftströmung 80 aus, die zur Folge hat, dass im Mündungsbereich des Saugschlauches der Unterdruck innerhalb von etwa 40 bis circa 60 ms sehr stark abfällt. Da dann jedoch der Ventilteller 34 bereits wieder seine Schließstellung eingenommen hat und die eingeströmte Fremdluft vom Saugaggregat 16 abgesaugt wird, steigt der Unterdruck anschließend wieder an, um nach etwa 200 ms praktisch seinen ursprünglichen Wert von circa 50 mbar einzunehmen. Werte unterhalb von 40 % des sich bei geschlossenem Schließventil 30 ausbildenden Wertes, also Werte von weniger als 20 mbar, nimmt der Unterdruck im Mündungsbereich des Saugschlauches lediglich für eine Zeitspanne von circa 60 ms ein. Dies hat zur Folge, dass für den Benutzer ein quasi kontinuierlicher Saugbetrieb aufrecht erhalten wird und dennoch eine zuverlässige Filterabreinigung gewährleistet ist. Das Schließventil weist hierbei eine kompakte Ausgestaltung auf mit geringer Bauform und kann kostengünstig hergestellt werden.

## Patentansprüche

1. Verfahren zum Abreinigen der Filter eines Staubsaugers, der einen Schmutzsammelbehälter mit einem Saugeinlass aufweist, an den ein Saugschlauch angeschlossen ist, wobei der Schmutzsammelbehälter über mindestens ein Filter und zumindest eine sich an dieses anschließende Absaugleitung mit mindestens einem Saugaggregat in Verbindung steht und zumindest ein Schließventil einen Fremdlufteinlass verschließt, über den die mindestens eine Absaugleitung mit einer Fremdluftzufuhr verbunden ist, und wobei man zur Abreinigung des mindestens einen Filters zumindest ein Schließventil öffnet und die dem Schmutzsammelbehälter abgewandte Seite des mindestens einen Filters mit Fremdluft beaufschlagt, **dadurch gekennzeichnet, dass** man durch gleichzeitiges Öffnen aller Schließventile den Unterdruck, der sich bei Anschluss eines 2,5 m langen, an seinem freien Ende offenen und einen Innendurchmesser von 35 mm aufweisenden Saugschlauches innerhalb des Saugschlauches in einem Abstand von 3 cm vom Saugeinlass ausbildet, für mindestens 10 ms und maximal 150 ms auf Werte von weniger als 40 % des sich bei geschlossenen Schließventilen ausbildenden Wertes absenkt.

2. Verfahren nach Anspruch 1, **dadurch gekennzeichnet, dass** man den Staubsauger mit einem einzigen Filter ausrüstet.

3. Verfahren nach Anspruch 1 oder 2, **dadurch gekennzeichnet, dass** man die gesamte, dem Schmutzsammelbehälter abgewandte Fläche des mindestens einen Filters durch Öffnen von einem einzigen Schließventil mit Fremdluft beaufschlagt.

4. Verfahren nach Anspruch 1, 2 oder 3, **dadurch gekennzeichnet, dass** man das mindestens eine Schließventil elektronisch betätigt.

5. Verfahren nach einem der voranstehenden Ansprüche, **dadurch gekennzeichnet, dass** man das mindestens eine Schließventil zeitgesteuert betätigt.

6. Verfahren nach Anspruch 5, **dadurch gekennzeichnet, dass** man das mindestens eine Schließventil in zeitlichen Abständen von weniger als 30 Sekunden betätigt.

7. Verfahren nach Anspruch 5 oder 6, **dadurch gekennzeichnet, dass** man das mindestens eine Schließventil in unterschiedlichen zeitlichen Abständen betätigt.

8. Verfahren nach einem der voranstehenden Ansprüche, **dadurch gekennzeichnet, dass** man das mindestens eine Schließventil in Abhängigkeit von der sich bei geschlossenem Schließventil an dem mindestens einen Filter ausbildenden Druckdifferenz elektronisch betätigt.

9. Staubsauger zur Durchführung des Verfahrens nach einem der voranstehenden Ansprüche, mit einem Schmutzsammelbehälter, der einen Saugeinlass aufweist, an den ein Saugschlauch angeschlossen ist, und mit mindestens einem mit dem Schmutzsammelbehälter über zumindest ein Filter und mindestens eine sich an dieses anschließende Absaugleitung in Verbindung stehenden Saugaggregat, sowie mit einem Fremdlufteinlass, über den die mindestens eine Absaugleitung mit einer Fremdluftzufuhr verbunden ist und der mittels zumindest eines Schließventils verschließbar ist, wobei das mindestens eine Schließventil zumindest einen gerätefesten Ventilsitz und einen bewegbaren Ventilkörper aufweist, **dadurch gekennzeichnet, dass** durch gleichzeitiges Öffnen aller Schließventile (30) der Unterdruck, der sich bei Anschluss eines 2,5 m langen, an seinem freien Ende offenen und einen Innendurchmesser von 35 mm aufweisenden Saugschlauches (20) innerhalb des Saugschlauches (20) in einem Abstand von 3 cm vom Saugeinlass (18) ausbildet, für mindestens 10 ms und maximal 150 ms auf Werte von weniger als 40 % des sich bei geschlossenen Schließventilen (30) ausbildenden Wertes absenkbar ist.

10. Staubsauger nach Anspruch 9, **dadurch gekennzeichnet, dass** der Staubsauger (10) ein einziges Filter (24) aufweist.

11. Staubsauger nach Anspruch 9 oder 10, **dadurch gekennzeichnet, dass** der Ventilkörper (34) unter Ausbildung von einer oder mehreren Dichtungslinien an den mindestens einen Ventilsitz (32) dicht anlegbar ist, wobei die von den Dichtungslinien begrenzte Fläche maximal halb so groß ist wie eine Kreisfläche, deren Umfang der Gesamtlänge aller Dichtungslinien entspricht.

12. Staubsauger nach Anspruch 11, **dadurch gekennzeichnet, dass** die von der mindestens einen Dichtungslinie begrenzte, im geschlossenen Zustand des mindestens einen Schließventils (30) mit einem Differenzdruck beaufschlagte Fläche kleiner ist als ein Fünftel einer Kreisfläche, deren Umfang der Gesamtlänge aller Dichtungslinien entspricht.

13. Staubsauger nach Anspruch 11 oder 12, **dadurch gekennzeichnet, dass** die Dichtungslinien mehrere geschlossene Dichtungsringe (66, 67, 68) ausbilden.

14. Staubsauger nach einem der Ansprüche 9 bis 13, **dadurch gekennzeichnet, dass** der Ventilkörper (34) zumindest eine Durchlassöffnung (57) aufweist, die in der Schließstellung des Ventilkörpers (34) von mindestens einem Dichtungselement (66, 67) begrenzt ist.

15. Staubsauger nach einem der Ansprüche 9 bis 14, **dadurch gekennzeichnet, dass** der Ventilsitz (32) mehrere Durchgangsöffnungen (40, 42) aufweist, die in der Schließstellung des Ventilkörpers (34) jeweils von mindestens einem Dichtungselement (66, 67, 68) begrenzt sind.

16. Staubsauger nach einem der Ansprüche 9 bis 15, **dadurch gekennzeichnet, dass** der Ventilkörper (34) mittels einer Schließfeder (36) mit einer Schließkraft beaufschlagt und mittels eines Elektromagneten (54) in seiner Schließstellung gehalten ist.

17. Staubsauger nach einem der Ansprüche 9 bis 16, **dadurch gekennzeichnet, dass** beim Öffnen des Schließventils (30) der Ventilkörper (34) kontinuierlich von seiner Schließstellung über seine Offenstellung zurück in seine Schließstellung bewegbar ist.

18. Staubsauger nach einem der Ansprüche 9 bis 17, **dadurch gekennzeichnet, dass** der Ventilkörper (34) in einer zylinderförmigen Führung (55) verschiebbar gehalten ist.

## Claims

1. Method for cleaning the filters of a vacuum cleaner which has a dirt collecting container with a suction inlet, to which a suction tube is connected, wherein the dirt collecting container is in connection with at least one suction unit via at least one filter and at least one suction line following the latter, and at least one closing valve closes an external air inlet, via which the at least one suction line is connected to an external air supply, and wherein, for cleaning the at least one filter, at least one closing valve is opened and the side of the at least one filter that is oriented away from the dirt collecting container is impinged upon by external air, **characterized in that**, by simultaneously opening all the closing valves, the negative pressure that forms within the suction tube at a distance of 3 cm from the suction inlet, on connecting a 2.5 m long suction tube that is open at its free end and has an internal diameter of 35 mm, is lowered for at least 10 ms and at most 150 ms to values of less than 40% of the value forming when the closing valves are closed.

2. Method according to Claim 1, **characterized in that** the vacuum cleaner is equipped with a single filter.

3. Method according to Claim 1 or 2, **characterized in that** the entire surface area of the at least one filter that is oriented away from the dirt collecting container is impinged upon by external air by opening only a single closing valve.

4. Method according to Claim 1, 2 or 3, **characterized in that** the at least one closing valve is electronically actuated.

5. Method according to one of the preceding claims, **characterized in that** the at least one closing valve is actuated in a time-controlled manner.

6. Method according to Claim 5, **characterized in that** the at least one closing valve is actuated at time intervals of less than 30 seconds.

7. Method according to Claim 5 or 6, **characterized in that** the at least one closing valve is actuated at different time intervals.

8. Method according to one of the preceding claims, **characterized in that** the at least one closing valve is electronically actuated in dependence on the pressure difference forming at the at least one filter when the closing valve is closed.

9. Vacuum cleaner for carrying out the method according to one of the preceding claims, with a dirt collecting container, which has a suction inlet, to which a suction tube is connected, and with at least one suction unit which is in connection with the dirt collecting container via at least one filter and at least one suction line following the latter, and also with an external air inlet, via which the at least one suction line is connected to an external air supply and which is adapted to be closed by means of at least one closing valve, the at least one closing valve having at least one fixed valve seat and a movable valve body, **characterized in that**, by simultaneously opening all the closing valves (30), the negative pressure that forms within the suction tube (20) at a distance of 3 cm from the suction inlet (18), on connecting a 2.5 m long suction tube (20) that is open at its free end and has an internal diameter of 35 mm, is lowerable for at least 10 ms and at most 150 ms to values of less than 40% of the value forming when the closing valves (30) are closed.

10. Vacuum cleaner according to Claim 9, **characterized in that** the vacuum cleaner (10) has a single filter (24).

11. Vacuum cleaner according to Claim 9 or 10, **characterized in that** the valve body (34) is adapted to be brought into sealing contact with the at least one valve seat (32) while forming one or more sealing lines, the surface area delimited by the sealing lines being at most half the size of a circular area having a circumference corresponding to the total length of all the sealing lines.

12. Vacuum cleaner according to Claim 11, **characterized in that** the surface area delimited by the at least one sealing line that is subjected to a differential pressure in the closed state of the at least one closing valve (30) is smaller than one fifth of a circular area having a circumference corresponding to the total length of all the sealing lines.

13. Vacuum cleaner according to Claim 11 or 12, **characterized in that** the sealing lines form a number of closed sealing rings (66, 67, 68).

14. Vacuum cleaner according to one of Claims 9 to 13, **characterized in that** the valve body (34) has at least one through-opening (57), which is delimited by at least one sealing element (66, 67) in the closed position of the valve body (34).

15. Vacuum cleaner according to one of Claims 9 to 14, **characterized in that** the valve seat (32) has a number of through-openings (40, 42), which are respectively delimited by at least one sealing element (66, 67, 68) in the closed position of the valve body (34).

16. Vacuum cleaner according to one of Claims 9 to 15, **characterized in that** the valve body (34) is subjected to a closing force by means of a closing spring (36) and is kept in its closed position by means of an electromagnet (54).

17. Vacuum cleaner according to one of Claims 9 to 16, **characterized in that** the valve body (34) is continuously movable from its closed position via its open position back into its closed position when the closing valve (30) is opened.

18. Vacuum cleaner according to one of Claims 9 to 17, **characterized in that** the valve body (34) is displaceably held in a cylindrical guide (55).

## Revendications

1. Procédé de nettoyage des filtres d'un aspirateur de poussières qui comporte un réservoir de collecte de saletés doté d'une entrée d'aspiration à laquelle est raccordé un tuyau d'aspiration, procédé dans lequel le réservoir de collecte de saletés est en liaison avec au moins une unité d'aspiration par le biais d'au moins un filtre et d'au moins une conduite d'aspiration raccordée à celui-ci et au moins un clapet de fermeture ferme une entrée d'air extérieur par laquelle l'au moins une conduite d'aspiration est reliée à une amenée d'air extérieur, et dans lequel l'on ouvre au moins un clapet de fermeture pour nettoyer l'au moins un filtre et l'on alimente en air extérieur le côté de l'au moins un filtre qui est opposé au réservoir de collecte de saletés, **caractérisé en ce que**, en ouvrant simultanément tous les clapets de fermeture, l'on abaisse la dépression qui, lors du raccordement d'un tuyau d'aspiration de 2,5 m de long, ouvert à son extrémité libre et ayant un diamètre intérieur de 35 mm, se forme à l'intérieur du tuyau d'aspiration à une distance de 3 cm de l'entrée d'aspiration, pendant au moins 10 ms et 150 ms maximum, à des valeurs de moins de 40% de la valeur obtenue lorsque les clapets de fermeture sont fermés.

2. Procédé selon la revendication 1, **caractérisé en ce que** l'on équipe l'aspirateur de poussières d'un seul filtre.

3. Procédé selon la revendication 1 ou 2, **caractérisé en ce que** l'on alimente toute la surface, opposée au réservoir de collecte de saletés, de l'au moins un filtre en air extérieur en ouvrant un seul clapet de fermeture.

4. Procédé selon la revendication 1, 2 ou 3, **caractérisé en ce que** l'on actionne électroniquement l'au moins un clapet de fermeture.

5. Procédé selon l'une des revendications précédentes, **caractérisé en ce que** l'on actionne de façon commandée dans le temps l'au moins un clapet de fermeture.

6. Procédé selon la revendication 5, **caractérisé en ce que** l'on actionne l'au moins un clapet de fermeture à des intervalles de temps de moins de 30 secondes.

7. Procédé selon la revendication 5 ou 6, **caractérisé en ce que** l'on actionne l'au moins un clapet de fermeture à des intervalles de temps différents.

8. Procédé selon l'une des revendications précédentes, **caractérisé en ce que** l'on actionne l'au moins un clapet de fermeture électroniquement en fonction de la différence de pression formée à l'au moins un filtre lorsque le clapet de fermeture est fermé.

9. Aspirateur de poussières destiné à mettre en oeuvre le procédé selon l'une des revendications précédentes, ledit aspirateur de poussières étant équipé d'un réservoir de collecte de saletés qui comporte une entrée d'aspiration à laquelle est raccordé un tuyau d'aspiration, et d'au moins une unité d'aspiration en liaison avec le réservoir de collecte de saletés par le biais d'au moins un filtre et d'au moins une conduite d'aspiration raccordée à celui-ci, ainsi que d'une entrée d'air extérieur par laquelle l'au moins une conduite d'aspiration est reliée à une amenée d'air extérieur et qui peut être fermée au moyen d'au moins un clapet de fermeture, l'au moins un clapet de fermeture comportant au moins un siège de clapet fixé à l'appareil et un corps de clapet mobile, **caractérisé en ce que**, en ouvrant simultanément tous les clapets de fermeture, l'on peut abaisser la dépression qui, lors du raccordement d'un tuyau d'aspiration (20) de 2,5 m de long, ouvert à son extrémité libre et ayant un diamètre intérieur de 35 mm, se forme à l'intérieur du tuyau d'aspiration (20) à une distance de 3 cm de l'entrée d'aspiration (18), pendant au moins 10 ms et 150 ms maximum, à des valeurs de moins de 40% de la valeur obtenue lorsque les clapets de fermeture (30) sont fermés.

10. Aspirateur de poussières selon la revendication 9, **caractérisé en ce que** l'aspirateur de poussières (10) comporte un seul filtre (24).

11. Aspirateur de poussières selon la revendication 9 ou 10, **caractérisé en ce que** le corps de clapet (34) peut être appliqué de façon étanche contre l'au moins un siège de clapet (32) en formant une ou plusieurs lignes d'étanchéité, la surface délimitée par les lignes d'étanchéité ayant une taille égale au maximum à la moitié d'une surface circulaire dont la périphérie correspond à la longueur totale de toutes les lignes d'étanchéité.

12. Aspirateur de poussières selon la revendication 11, **caractérisé en ce que** la surface délimitée par l'au moins une ligne d'étanchéité et sollicitée par une pression différentielle lorsque l'au moins un clapet de fermeture (30) est fermé est inférieure à un cinquième d'une surface circulaire dont la périphérie correspond à la longueur totale de toutes les lignes d'étanchéité.

13. Aspirateur de poussières selon la revendication 11 ou 12, **caractérisé en ce que** les lignes d'étanchéité forment plusieurs anneaux d'étanchéité fermés (66, 67, 68).

14. Aspirateur de poussières selon l'une des revendications 9 à 13, **caractérisé en ce que** le corps de clapet (34) comporte au moins une ouverture de passage (57) qui est délimitée par au moins un élément d'étanchéité (66, 67) lorsque le corps de clapet (34) est dans la position de fermeture.

15. Aspirateur de poussières selon l'une des revendications 9 à 14, **caractérisé en ce que** le siège de clapet (32) comporte plusieurs ouvertures de passage (40, 42) qui sont délimitées chacune par au moins un élément d'étanchéité (66, 67, 68) lorsque le corps de clapet (35) est dans la position de fermeture.

16. Aspirateur de poussières selon l'une des revendications 9 à 15, **caractérisé en ce que** le corps de clapet (34) est sollicité par une force de fermeture au moyen d'un ressort de fermeture (36) et est maintenu dans sa position de fermeture au moyen d'un électroaimant (54).

17. Aspirateur de poussières selon l'une des revendications 9 à 16, **caractérisé en ce que**, lors de l'ouverture du clapet de fermeture (30), le corps de clapet (34) peut, et ce de façon continue, être écarté de sa position de fermeture et ramené dans sa position de fermeture en passant par sa position d'ouverture.

18. Aspirateur de poussières selon l'une des revendications 9 à 17, **caractérisé en ce que** le corps de clapet (34) est maintenu de façon à pouvoir se déplacer dans un guide (55) de forme cylindrique.
